# EUROPEAN PATENT APPLICATION

(11) **EP 3 496 462 A1**
(43) Date of publication of application: **12.06.2019**
(21) Application number: 17840932.2
(22) Date of filing: 29.07.2017
(51) Int. Cl.: H04W 36/30

(54) **SIGNAL MEASUREMENT METHOD, RELATED DEVICE AND COMMUNICATION SYSTEM**

(30) Priority: 17.08.2016 CN 201610681685
(71) Applicant: Huawei Technologies Co., Ltd., Longgang District Shenzhen, Guangdong 518129 (CN)
(72) Inventor: ZHANG, Wei, Shenzhen Guangdong 518129 (CN); JIN, Yinghao, Shenzhen Guangdong 518129 (CN)
(74) Representative: Maiwald Patent- und Rechtsanwaltsgesellschaft mbH
(86) International application number: PCT/CN2017/095080
(87) International publication number: WO 2018/032957

(57) **Abstract**

The present invention discloses a signal measurement method, a related device, and a communications system. The method includes: obtaining, by an access network device on which user equipment currently camps, an uplink signal measurement value corresponding to the user equipment; and when the uplink signal measurement value meets a preset condition, sending, by the access network device, a first instruction message to the user equipment, where the first instruction message is used to instruct the user equipment to perform downlink signal measurement. This resolves a problem that in a scenario in which the access network device performs uplink signal measurement, the user equipment is disconnected because the user equipment moves out of a coverage area of the access network device that supports an uplink signal measurement manner.

## Description

### TECHNICAL FIELD

The present invention relates to the field of communications technologies, and in particular, to a signal measurement method, a related device, and a communications system.

### BACKGROUND

In an existing communications system, all design ideas about mobility management are network-centric design ideas. User equipment (English: User Equipment, UE for short) in a connected mode is used as an example. To implement mobility management for the UE, each access network device in a network sends a downlink reference signal for measurement by the UE. The UE measures the downlink reference signal sent by the access network device, and reports a measurement result to the access network device in a form of a measurement report. The access network device makes a handover decision based on the measurement report of the UE, to determine whether to hand the UE over to a cell with a good signal condition for data transmission.

During research discussion about a 5th Generation (English: 5th Generation, 5G for short) wireless communications network, vendors tend to introduce a new measurement manner, namely, measurement controlled by an access network device. The measurement manner is as follows: UE sends an uplink signal instead of performing downlink signal measurement; and a new-RAT cell to which the UE is attached and a neighboring new-RAT cell receive the signal, compare signal strength of the cells, and select a proper cell to provide a service for the UE. The new measurement manner has the following problem: In a scenario in which an access network device controls measurement, the UE does not perceive a change of a peripheral network. When the UE leaves coverage of the new-RAT cell and moves to a coverage area of a Long Term Evolution (English: Long Term Evolution, LTE for short) cell or another-RAT cell, inter-RAT handover needs to be performed on the UE. However, the UE does not perform downlink signal measurement in this case, and therefore the UE cannot be handed over to an LTE network or another-RAT network. As a result, the UE is disconnected.

### SUMMARY

Embodiments of the present invention provide a signal measurement method, a related device, and a communications system, to resolve a problem that in a scenario in which an access network device performs uplink signal measurement, user equipment is disconnected because the user equipment moves out of a coverage area of the access network device that supports an uplink signal measurement manner.

According to a first aspect, the present invention provides a signal measurement method. The method includes: obtaining, by an access network device on which user equipment currently camps, an uplink signal measurement value corresponding to the user equipment; and when the uplink signal measurement value meets a preset condition, sending, by the access network device, a first instruction message to the user equipment, where the first instruction message is used to instruct the user equipment to perform downlink signal measurement. The access network device obtains the uplink signal measurement value corresponding to the user equipment; and when the uplink signal measurement value meets the preset condition, the access network device sends the first instruction message to the user equipment, and the user equipment performs downlink signal measurement based on the first instruction message. Therefore, in a scenario in which the access network device performs uplink signal measurement, the user equipment can perform downlink measurement based on the first instruction message sent by the access network device, to avoid a problem that the user equipment is disconnected because the user equipment moves out of a coverage area of the access network device that supports an uplink signal measurement manner.

According to a second aspect, the present invention provides a signal measurement method. The method includes: receiving, by user equipment, a first instruction message sent by an access network device on which the user equipment currently camps, where the first instruction message is sent by the access network device when an uplink signal measurement value corresponding to the user equipment meets a preset condition; and performing, by the user equipment, downlink signal measurement based on the first instruction message. In a scenario in which the access network device performs uplink signal measurement, the user equipment can perform downlink measurement based on the first instruction message sent by the access network device, to avoid a problem that the user equipment is disconnected because the user equipment moves out of a coverage area of the access network device that supports an uplink signal measurement manner.

According to a third aspect, the present invention provides an access network device. The access network device is an access network device on which user equipment currently camps, and the access network device includes a processor, a memory, and a transceiver. The memory is configured to store an instruction. The processor is separately connected to the memory and the transceiver, and is configured to execute the instruction to perform the following steps when executing the instruction: obtaining an uplink signal measurement value corresponding to the user equipment; and when the uplink signal measurement value meets a preset condition, sending a first instruction message to the user equipment by using the transceiver, where the first instruction message is used to instruct the user equipment to perform downlink signal measurement. The access network device obtains the uplink signal measurement value corresponding to the user equipment; and when the uplink signal measurement value meets the preset condition, the access network device sends the first instruction message to the user equipment, and the user equipment performs downlink signal measurement based on the first instruction message. Therefore, in a scenario in which the access network device performs uplink signal measurement, the user equipment can perform downlink measurement based on the first instruction message sent by the access network device, to avoid a problem that the user equipment is disconnected because the user equipment moves out of a coverage area of the access network device that supports an uplink signal measurement manner.

According to a fourth aspect, the present invention provides user equipment. The user includes a processor, a memory, and a transceiver. The memory is configured to store an instruction. The processor is separately connected to the memory and the transceiver, and is configured to execute the instruction to perform the following steps when executing the instruction: receiving, by using the transceiver, a first instruction message sent by an access network device on which the user equipment currently camps, where the first instruction message is sent by the access network device when an uplink signal measurement value corresponding to the user equipment meets a preset condition; and performing downlink signal measurement based on the first instruction message. In a scenario in which the access network device performs uplink signal measurement, the user equipment can perform downlink measurement based on the first instruction message sent by the access network device, to avoid a problem that the user equipment is disconnected because the user equipment moves out of a coverage area of the access network device that supports an uplink signal measurement manner.

According to a fifth aspect, the present invention provides an access network device. The access network device is an access network device on which user equipment currently camps, and the access network device includes an obtaining module and a sending module. The obtaining module is configured to obtain an uplink signal measurement value corresponding to the user equipment. The sending module is configured to: when the uplink signal measurement value meets a preset condition, send a first instruction message to the user equipment, where the first instruction message is used to instruct the user equipment to perform downlink signal measurement. The access network device obtains the uplink signal measurement value corresponding to the user equipment; and when the uplink signal measurement value meets the preset condition, the access network device sends the first instruction message to the user equipment, and the user equipment performs downlink signal measurement based on the first instruction message. Therefore, in a scenario in which the access network device performs uplink signal measurement, the user equipment can perform downlink measurement based on the first instruction message sent by the access network device, to avoid a problem that the user equipment is disconnected because the user equipment moves out of a coverage area of the access network device that supports an uplink signal measurement manner.

According to a sixth aspect, the present invention provides user equipment. The user includes a receiving module and a measurement module. The receiving module is configured to receive a first instruction message sent by an access network device on which the user equipment currently camps, where the first instruction message is sent by the access network device when an uplink signal measurement value corresponding to the user equipment meets a preset condition. The measurement module is configured to perform downlink signal measurement based on the first instruction message. In a scenario in which the access network device performs uplink signal measurement, the user equipment can perform downlink measurement based on the first instruction message sent by the access network device, to avoid a problem that the user equipment is disconnected because the user equipment moves out of a coverage area of the access network device that supports an uplink signal measurement manner.

According to a seventh aspect, the present invention provides a communications system, including an access network device and user equipment. The access network device is the access network device described in the third aspect or the fifth aspect, and the user equipment is the user equipment described in the fourth aspect or the sixth aspect.

With reference to any one of the foregoing aspects, in some implementations of the present invention, the uplink signal measurement value includes an uplink signal measurement value obtained after the access network device on which the user equipment currently camps measures an uplink signal sent by the user equipment. The access network device on which the user equipment currently camps triggers, based on the uplink signal measurement value obtained by the access network device, the user equipment to perform downlink measurement, without a need to consider a measurement result of another access network device, so that a trigger process can be more convenient.

With reference to any one of the foregoing aspects, in some implementations of the present invention, the uplink signal measurement value further includes an uplink signal measurement value obtained after a neighboring access network device of the access network device on which the user equipment currently camps measures the uplink signal sent by the user equipment. The access network device on which the user equipment currently camps triggers, based on the uplink signal measurement value obtained by the access network device and the uplink signal measurement value of the neighboring access network device, the user equipment to perform downlink measurement, with a need to consider both a measurement result of the access network device and a measurement result of another access network device, so that a trigger process can be more accurate.

With reference to any one of the foregoing aspects, in some implementations of the present invention, the preset condition is that the uplink signal measurement value is less than or equal to a preset threshold. When the uplink signal measurement value is less than or equal to the preset threshold, the access network device on which the user equipment currently camps learns that the user equipment is far away from a coverage area of the access network device or the neighboring access network device of the access network device, and therefore the access network device on which the user equipment currently camps triggers the user equipment to perform downlink measurement. This can avoid a problem that the user equipment is disconnected.

With reference to any one of the foregoing aspects, in some implementations of the present invention, the first instruction message includes instruction information, and the instruction information is used to instruct the user equipment to perform downlink signal measurement. The user equipment can learn, based on the instruction information only by parsing the first instruction message, that the user equipment needs to start downlink measurement, so that an operation is simple.

With reference to any one of the foregoing aspects, in some implementations of the present invention, the first instruction message further includes measurement configuration information of the access network device on which the user equipment currently camps, and the measurement configuration information is used to instruct the user equipment to measure, based on the measurement configuration information, a downlink signal sent by the access network device on which the user equipment currently camps. The access network device on which the user equipment currently camps adds the measurement configuration information to the first instruction message and sends the first instruction message to the user equipment. The user equipment receives the first instruction message that is sent by the currently camped access network device and that carries the measurement configuration information, and performs downlink measurement based on the measurement configuration information. Therefore, the user equipment does not need to further obtain the measurement configuration information from a broadcast message of the currently camped access network device, to improve efficiency of obtaining the measurement configuration information.

With reference to any one of the foregoing aspects, in some implementations of the present invention, the first instruction message further includes measurement configuration information of the neighboring access network device of the access network device on which the user equipment currently camps, and the measurement configuration information is used to instruct the user equipment to measure, based on the measurement configuration information, a downlink signal sent by the neighboring access network device. The access network device on which the user equipment currently camps adds the measurement configuration information to the first instruction message and sends the first instruction message to the user equipment. The user equipment receives the first instruction message that is sent by the currently camped access network device and that carries the measurement configuration information, and performs downlink measurement based on the measurement configuration information. Therefore, the user equipment does not need to further obtain the measurement configuration information from a broadcast message of the currently camped access network device, to improve efficiency of obtaining the measurement configuration information.

With reference to any one of the foregoing aspects, in some implementations of the present invention, the first instruction message further includes measurement report reporting event instruction information, and the measurement report reporting event instruction information is used to instruct the user equipment to determine, based on a downlink measurement result and the measurement report reporting event instruction information, whether to report the measurement result to the currently camped access network device. The measurement report reporting event instruction information includes information about an intra-RAT intra-frequency/inter-frequency measurement event and/or information about an inter-RAT measurement event.

With reference to any one of the foregoing aspects, in some implementations of the present invention, the first instruction message includes a radio resource control (English: Radio Resource Control, RRC for short) reconfiguration message, a measurement configuration message, or a paging (English: paging) message.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description merely show some embodiments of the present invention, and persons of ordinary skill in the art can derive other accompanying drawings from these accompanying drawings without creative efforts.
FIG. 1 is a schematic architectural diagram of a communications system according to an embodiment of the present invention;
FIG. 2 is a schematic structural diagram of Embodiment 1 of an access network device shown in FIG. 1;
FIG. 3 is a schematic structural diagram of Embodiment 2 of an access network device shown in FIG. 1;
FIG. 4 is a schematic flowchart of Embodiment 1 of a signal measurement method according to an embodiment of the present invention;
FIG. 5A, FIG. 5B, and FIG. 5C are a schematic flowchart of Embodiment 2 of a signal measurement method according to an embodiment of the present invention;
FIG. 6 is a schematic structural diagram of Embodiment 1 of an access network device according to an embodiment of the present invention;
FIG. 7 is a schematic structural diagram of Embodiment 1 of user equipment according to an embodiment of the present invention;
FIG. 8 is a schematic structural diagram of Embodiment 2 of an access network device according to an embodiment of the present invention; and
FIG. 9 is a schematic structural diagram of Embodiment 2 of user equipment according to an embodiment of the present invention.

### DESCRIPTION OF EMBODIMENTS

Terms used in the embodiments of the present invention are merely used to explain specific embodiments of the present invention, but not intended for limiting the present invention. The following clearly describes the technical solutions in the embodiments of the present invention with reference to the accompanying drawings in the embodiments of the present invention.

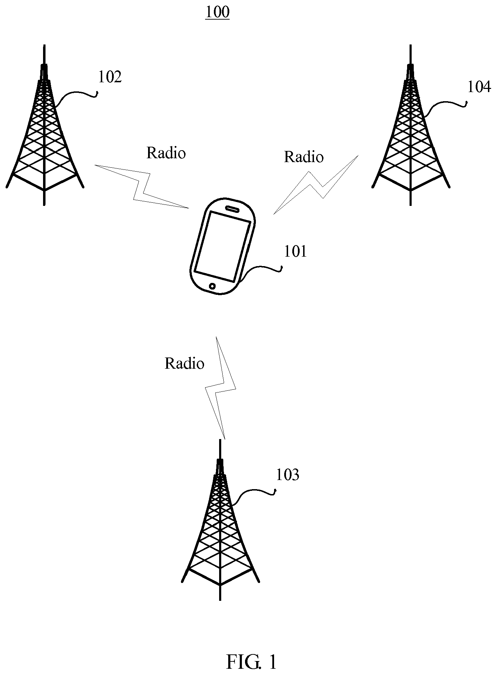

FIG. 1 is a schematic architectural diagram of a communications system according to an embodiment of the present invention. The communications system 100 includes user equipment 101, an access network device 102, and an access network device 103. The access network device 102 is an access network device on which the user equipment 101 currently camps. The access network device 102 communicates with the user equipment 101 by using an air interface. The access network device 102 has an uplink signal measurement capability. The access network device 103 is adjacent to the access network device 102.

Any device that can perform data communication with an access network device may be considered as the user equipment 101. The present invention is described by using UE in a general sense. In addition, the user equipment 101 may also be referred to as a mobile console, an access terminal, a subscriber unit, a subscriber station, a mobile station, a remote station, a remote terminal, a mobile device, a user terminal, a terminal, a wireless communications device, a user agent, a user apparatus, or the like. The user equipment 101 may be a cellular phone, personal digital processing (English: Personal Digital Assistant, PDA for short), a handheld device that has a wireless communication function, an in-vehicle device, a wearable device, a mobile console in a future 5G network, a terminal device in a future evolved public land mobile network (English: Public Land Mobile Network, PLMN for short) network, or the like.

The access network device 102 may be an access network device in a new radio (English: New Radio, NR for short) technology, and a function of the access network device 102 includes but is not limited to functions such as mobility management, call processing, link management, security encryption, header compression, scheduling, coding, modulation, demodulation, retransmission, segmentation, aggregation, and radio frequency for the user equipment 101. In addition, in this embodiment of the present invention, the access network device 102 also has an uplink signal measurement function, and therefore can measure an uplink signal sent by the user equipment 101, and determine, based on an uplink signal measurement value, whether to trigger the user equipment 101 to start downlink measurement. In addition, in an NR system, the access network device 102 may use another name, including but not limited to a base station (English: Base Station, BS for short), an evolved NodeB, or the like.

Optionally, the communications system 100 further includes at least one access network device that is adjacent to the access network device 102 and that has the uplink signal measurement capability. An example in which an access network device 104 that has the uplink signal measurement capability is adjacent to the access network device 102 is used for description in this embodiment.

The access network device 104 is also an access network device in the NR system, and also has the capability to measure an uplink signal sent by the user equipment 101. The access network device 104 and the access network device 102 may be intra-RAT access network devices or inter-RAT access network devices. A function of the access network device 104 includes but is not limited to functions such as mobility management, call processing, link management, security encryption, header compression, scheduling, coding, modulation, demodulation, retransmission, segmentation, aggregation, and radio frequency for the user equipment 101. In addition, there is a communications interface between the access network device 104 and the access network device 102, and the access network device 104 sends, to the access network device 102 by using the communications interface, a measurement value obtained by the access network device 104 through measurement. The access network device 102 makes a centralized decision based on the measurement value obtained by the access network device 102 through measurement and the measurement value sent by the access network device 104, to determine whether to trigger the user equipment 101 to start downlink measurement.

In a first application scenario of the present invention, the access network device 103 does not have the uplink signal measurement capability. The user equipment 101 camps on the access network device 102. In this case, when the user equipment 101 moves from a coverage area of the access network device 102 to a coverage area of the access network device 103 that does not support uplink measurement, because the access network device 103 does not have the uplink measurement capability, the access network device 102 needs to trigger the user equipment 101 to start downlink measurement. Only in this way, a problem that the user equipment 101 is disconnected is avoided.

Specifically, the access network device 103 still has a function of a base station in an existing communications network, and has a capability to send a downlink signal to the user equipment 101 to enable the user equipment 101 to perform downlink measurement, but does not have the capability to measure an uplink signal sent by the user equipment 101. The access network device 103 may be a base transceiver station (English: Base Transceiver Station, BTS for short) in a 2G system (for example, a Global System for Mobile Communications (English: Global System for Mobile Communications, GSM for short) or a Code Division Multiple Access (English: Code Division Multiple Access, CDMA for short) system), may be a NodeB (English: NodeB, NB for short) in a 3G system (for example, a Universal Mobile Telecommunications System (English: Universal Mobile Telecommunications System, UMTS for short), a Wideband Code Division Multiple Access (English: Wideband Code Division Multiple Access, WCDMA for short) system, or a Time Division-Synchronous Code Division Multiple Access (English: Time Division-Synchronous Code Division Multiple Access, TD-SCDMA for short) system), or may be an evolved NodeB (English: evolved NodeB, eNB for short) in a Long Term Evolution (English: Long Term Evolution, LTE for short) system. The access network device 103 is an inter-RAT access network device of the access network device 102. For example, the access network device 102 is a base station in a 5G network system, and the access network device 103 is the eNB in the LTE system. In addition, there may also be a communications interface between the access network device 103 and the access network device 102, and there may also be a communications interface between the access network device 103 and the access network device 104. The access network device 103 may communicate with the access network device 102 by using the communications interface, and the access network device 103 may also communicate with the access network device 104 by using the communications interface.

It should be noted that the communications system 100 shown in FIG. 1 is also applicable to an NR BS heterogeneous network (English: Heterogeneous Network, HetNet for short), and the NR BS network includes a macro base station and a micro base station. In a second application scenario of the present invention, the access network device 102 in FIG. 1 is a micro base station, the access network device 103 is a macro base station, and the access network device 104 is a micro base station. The user equipment 101 currently camps on the access network device 102. When the user equipment 101 is within a coverage area of the access network device 102, because a coverage area of a micro base station is small, uplink signal transmit power of the user equipment 101 may be relatively small, to reduce the transmit power of the user equipment 101. When the user equipment 101 moves out of the coverage area of the access network device 102, because the uplink transmit power of the user equipment 101 is relatively small, an uplink signal received by the access network device 103 from the user equipment 101 is relatively weak, and even the access network device 103 fails to receive the uplink signal from the user equipment 101. In this case, the user equipment 101 may also be disconnected as described above. In this scenario, in a process in which the user equipment 101 moves from the coverage area of the access network device 102 to a coverage area of the access network device 103, as soon as the access network device 102 detects that an uplink measurement value of the user equipment 101 is less than a threshold, the access network device 102 triggers the user equipment 101 to start downlink measurement. In this case, the user equipment 101 may detect a signal of the access network device 103, and is handed over to the macro base station, to avoid a problem that the user equipment 101 is disconnected.

It should be noted that the macro base station and the micro base station described in this embodiment of the present invention may also use other names in a future communications network, and are used as examples in this embodiment of the present invention.

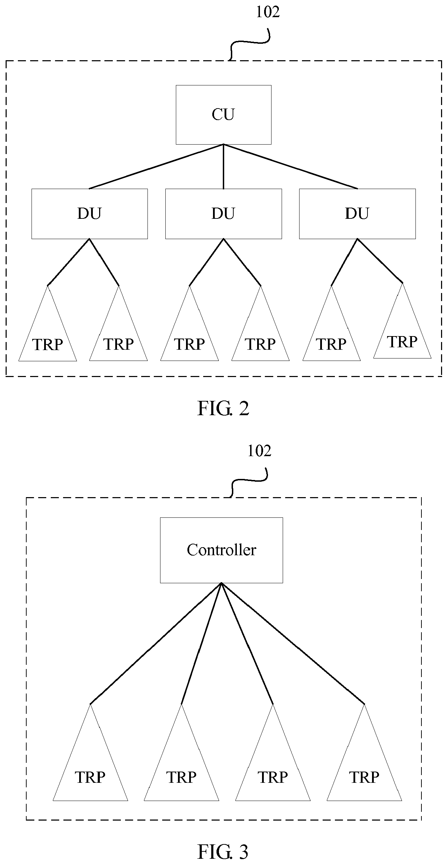

FIG. 2 is a schematic structural diagram of Embodiment 1 of an access network device shown in FIG. 1. The access network device in FIG. 2 is the access network device 102 or the access network device 104 in the communications system shown in FIG. 1. The access network device 102 is in a layered architecture. In the layered architecture, the access network device 102 includes a central unit (English: Central Unit, CU for short), a distributed unit (English: Distributed Unit, DU for short), and a transmission reception point (English: Transmission Reception Point, TRP for short). The access network device 102 may include one or more CUs. A quantity of DUs corresponding to each CU is not limited, and a quantity of TRPs corresponding to each DU is not limited. An example in which the access network device 102 includes one CU, the CU is corresponding to three DUs, and each DU is corresponding to two TRPs is used for description in this embodiment of the present invention. The CU interconnects with the DU by using an interface to complete data transmission between the CU and the DU. The CU may communicate with the DU in a wired manner or a wireless manner. For example, the CU communicates with the DU in the wired manner in this embodiment of the present invention. The DU is connected to the TRP by using an interface to complete data transmission between the DU and the TRP. The DU may communicate with the TRP in a wired manner or a wireless manner. For example, the DU communicates with the TRP in the wired manner in this embodiment of the present invention.

The CU has at least the following functions: mobility management, call processing, and link management for the user equipment 101. Further, the CU may have functions such as security encryption and header compression. The DU has at least a scheduling function. Further, the DU may have functions such as coding, modulation, demodulation, retransmission, segmentation, and aggregation. The TRP has at least a radio frequency function, and can be configured to transmit a mobile communication signal generated by the CU, and further configured to receive uplink data and an uplink signal that are sent by the user equipment 101. In this embodiment of the present invention, the DU may have an uplink signal measurement function. After receiving an uplink signal sent by the user equipment 101, TRPs transmit received signals to the corresponding DUs. The DUs receive the signals sent by the TRPs, and the DUs calculate measurement values. After obtaining the measurement values, the DUs transmit the measurement values to the CU. The CU receives the measurement values reported by the DUs. Alternatively, the TRP may have an uplink signal measurement function. After receiving an uplink signal sent by the user equipment 101, TRPs perform measurement to obtain measurement values, and send the obtained measurement values to the corresponding DUs. The DUs receive the measurement values sent by the TRPs, and then send the measurement values to the CU. The CU receives the measurement values reported by the DUs. TRPs in a same access network device may be corresponding to different measurement values.

Likewise, the access network device 104 is also in a layered architecture. In other words, the access network device 104 also includes a CU, a DU, and a TRP. Functions of the modules are similar to those of the modules in the access network device 102, and details are not described herein again. The access network device 104 may include one or more CUs. A quantity of DUs corresponding to each CU is not limited, and a quantity of TRPs corresponding to each DU is not limited. An example in which the access network device 104 is corresponding to one CU, the CU is corresponding to three DUs, and each DU is corresponding to two TRPs is used for description in this embodiment of the present invention. There is a communications interface between the access network device 104 and the access network device 102. After obtaining a measurement value of the user equipment 101, the CU of the access network device 104 transmits the obtained measurement value to the CU of the access network device 102 by using the communications interface. The CU of the access network device 102 receives the measurement value sent by the CU of the access network device 104. The CU of the access network device 102 is further configured to determine, based on the uplink signal measurement value of the user equipment 101, whether to trigger the user equipment 101 to start downlink signal measurement.

FIG. 3 is a schematic structural diagram of Embodiment 2 of an access network device shown in FIG. 1. The access network device in FIG. 3 is the access network device 102 or the access network device 104 in the communications system shown in FIG. 1. The access network device 102 is in a flat architecture. In the flat architecture, the access network device 102 includes a controller (English: Controller) and a TRP. The access network device 102 may include one or more controllers. A quantity of TRPs corresponding to each controller is not limited. An example in which the access network device 102 includes one controller and four TRPs is used for description in this embodiment of the present invention. The controller is connected to the TRP by using an interface to complete data transmission between the controller and the TRP. The controller may communicate with the TRP in a wired manner or a wireless manner. For example, the controller communicates with the TRP in the wired manner in this embodiment of the present invention.

The controller has at least the following functions: mobility management, call processing, link management, security encryption, header compression, scheduling, retransmission, segmentation, and aggregation for the user equipment 101. Further, the controller may have functions such as coding, modulation, and demodulation. The TRP has at least a radio frequency function, and can be configured to transmit a mobile communication signal generated by the controller, and further configured to receive uplink data and an uplink signal that are sent by the user equipment 101. In this embodiment of the present invention, the controller may have an uplink signal measurement function. After receiving an uplink signal sent by the user equipment 101, the TRPs transmit received signals to the controller. The controller receives the signals sent by the TRPs, and calculates measurement values. Alternatively, the TRP has an uplink signal measurement function. After receiving an uplink signal sent by the user equipment 101, the TRPs obtain measurement values through calculation, and send the measurement values to the controller. The controller receives the measurement values sent by the TRPs. TRPs in a same access network device may be corresponding to different measurement values.

Likewise, the access network device 104 is also in a flat architecture. In other words, the access network device 104 also includes a controller and a TRP. Functions of the modules are similar to those of the modules in the access network device 102, and details are not described herein again. The access network device 104 may include one or more controllers. A quantity of TRPs corresponding to each controller is not limited. An example in which the access network device 104 includes one controller and four TRPs is used for description in this embodiment of the present invention. There is a communications interface between the access network device 104 and the access network device 102. After obtaining a measurement value of the user equipment 101, the controller of the access network device 104 transmits the obtained measurement value to the controller of the access network device 102 by using the communications interface. The controller of the access network device 102 receives the measurement value sent by the controller of the access network device 104. The controller of the access network device 102 is further configured to determine, based on the uplink signal measurement value of the user equipment 101, whether to trigger the user equipment 101 to start downlink signal measurement.

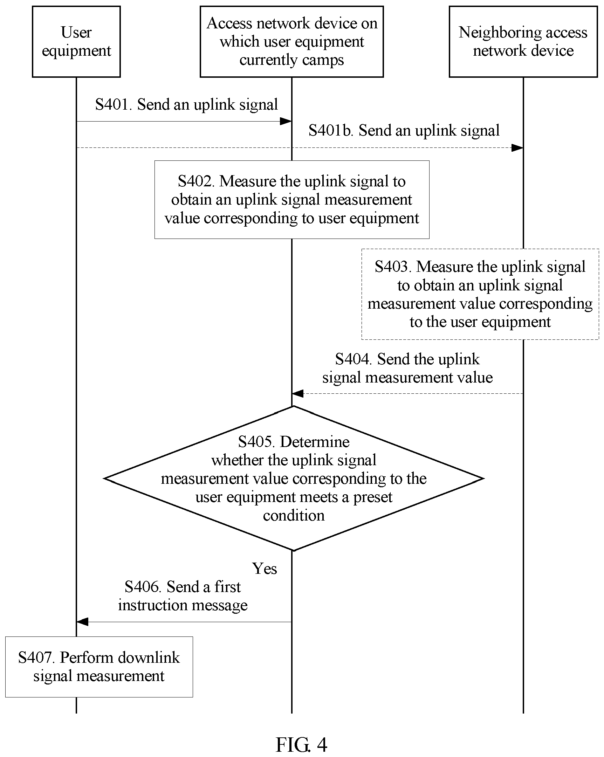

FIG. 4 is a schematic flowchart of Embodiment 1 of a signal measurement method according to an embodiment of the present invention. The method includes but is not limited to the following steps.

S401. User equipment sends an uplink signal to an access network device on which the user equipment currently camps. The access network device on which the user equipment currently camps receives the uplink signal sent by the user equipment.

The uplink signal includes but is not limited to a sounding reference signal (English: Sounding Reference Signal, SRS for short) or a preamble (English: preamble) sequence. Alternatively, the uplink signal may be a signal newly defined in a protocol. Optionally, the user equipment may periodically send the uplink signal. A period may be specified by using the protocol.

Specifically, for the structure of the access network device shown in FIG. 2, the user equipment 101 may send an uplink signal to six TRPs of the access network device 102. The six TRPs of the access network device 102 separately receive the uplink signal sent by the user equipment 101.

For the structure of the access network device shown in FIG. 3, the user equipment 101 sends an uplink signal to four TRPs of the access network device 102. The four TRPs of the access network device 102 separately receive the uplink signal sent by the user equipment 101.

Optionally, after step S401 and before step S405, the method further includes step S401b: The user equipment sends an uplink signal to a neighboring access network device of the access network device on which the user equipment currently camps. The neighboring access network device of the access network device on which the user equipment currently camps receives the uplink signal sent by the user equipment. For example, the user equipment may send the uplink signal in a broadcast manner. A quantity of access network devices adjacent to the access network device on which the user equipment currently camps is not specifically limited.

It should be noted that step S401 and step S401b may be simultaneously performed.

For the structure of the access network device shown in FIG. 2, the user equipment 101 sends an uplink signal to six TRPs of the access network device 102 and six TRPs of the access network device 104. The six TRPs of the access network device 102 and the six TRPs of the access network device 104 separately receive the uplink signal sent by the user equipment 101.

For the structure of the access network device shown in FIG. 3, the user equipment 101 sends an uplink signal to four TRPs of the access network device 102 and four TRPs of the access network device 104. The four TRPs of the access network device 102 and the four TRPs of the access network device 104 separately receive the uplink signal sent by the user equipment 101.

S402. The access network device on which the user equipment currently camps measures the uplink signal sent by the user equipment, to obtain an uplink signal measurement value corresponding to the user equipment.

The access network device on which the user equipment currently camps measures the uplink signal sent by the user equipment. A measurement value obtained through measurement by the access network device on which the user equipment currently camps is the uplink signal measurement value corresponding to the user equipment. The access network device on which the user equipment currently camps triggers, based on the uplink signal measurement value obtained by the access network device, the user equipment to perform downlink measurement, without a need to consider a measurement result of another access network device, so that a trigger process can be more convenient.

For example, if the user equipment is at a central location of a coverage area of the access network device on which the user equipment currently camps, the access network device on which the user equipment currently camps needs to perform uplink measurement for the user equipment, but the neighboring access network device does not need to perform uplink measurement for the user equipment. Whether the neighboring access network device needs to perform measurement is determined by the access network device on which the user equipment currently camps.

Specifically, for the structure of the access network device shown in FIG. 2, the user equipment 101 sends an uplink signal to six TRPs of the access network device 102, and the six TRPs of the access network device 102 separately receive the uplink signal sent by the user equipment 101. If the TRP does not have an uplink signal measurement function, but the DU has the uplink signal measurement function, the six TRPs of the access network device 102 send respective received signals to the corresponding DUs. The DUs receive the signals sent by the TRPs, and separately measure the signals sent by the TRPs. Each DU obtains two uplink signal measurement values, and then each DU sends the obtained two uplink signal measurement values to the CU of the access network device 102. The CU of the access network device 102 receives the two uplink signal measurement values sent by each of the three DUs, and finally obtains six uplink signal measurement values corresponding to the user equipment 101. Alternatively, if the TRP has an uplink signal measurement function, the six TRPs of the access network device 102 separately measure the uplink signal sent by the user equipment 101. Each TRP obtains one uplink signal measurement value, and then each TRP sends the obtained uplink signal measurement value to a corresponding DU. The DUs receive uplink signal measurement values sent by the TRPs, and each DU obtains two uplink signal measurement values. Then, each DU sends the obtained two uplink signal measurement values to the CU of the access network device 102. The CU of the access network device 102 receives the two uplink signal measurement values sent by each of the three DUs, and finally obtains six uplink signal measurement values corresponding to the user equipment 101.

For the structure of the access network device shown in FIG. 3, the user equipment 101 sends an uplink signal to four TRPs of the access network device 102. The four TRPs of the access network device 102 separately receive the uplink signal sent by the user equipment 101. If the TRP does not have an uplink signal measurement function, but the controller has the uplink signal measurement function, the four TRPs of the access network device 102 send respective received signals to the controller of the access network device 102. The controller of the access network device 102 receives the signals sent by the TRPs, and separately measures the signals sent by the four TRPs. The controller of the access network device 102 finally obtains four uplink signal measurement values corresponding to the user equipment 101. Alternatively, if the TRP has an uplink signal measurement function, the four TRPs of the access network device 102 separately measure the uplink signal sent by the user equipment 101. Each TRP obtains one uplink signal measurement value, and each TRP sends the uplink signal measurement value obtained by each TRP to the controller of the access network device 102. The controller of the access network device 102 receives the uplink signal measurement value sent by each TRP, and finally obtains four uplink signal measurement values corresponding to the user equipment 101.

Optionally, the neighboring access network device of the access network device on which the user equipment currently camps also measures the uplink signal sent by the user equipment. After step S401b and before step S405, the method further includes steps S403 and S404. S403. The neighboring access network device of the access network device on which the user equipment currently camps measures the uplink signal sent by the user equipment, to obtain an uplink signal measurement value corresponding to the user equipment. S404. The neighboring access network device of the access network device on which the user equipment currently camps sends the obtained uplink signal measurement value to the access network device on which the user equipment currently camps. The neighboring access network device that receives the uplink signal sent by the user equipment and that is described in this embodiment of the present invention has an uplink signal measurement capability.

The neighboring access network device sends the obtained uplink signal measurement value to the access network device on which the user equipment currently camps. The access network device on which the user equipment currently camps receives the uplink signal measurement value sent by the neighboring access network device, and determines, as the uplink signal measurement value corresponding to the user equipment, the uplink signal measurement value obtained by the access network device through measurement and the uplink signal measurement value received from the neighboring access network device. The access network device on which the user equipment currently camps triggers, based on the uplink signal measurement value obtained by the access network device and the uplink signal measurement value of the neighboring access network device, the user equipment to perform downlink measurement, with a need to consider both a measurement result of the access network device and a measurement result of another access network device, so that a trigger process can be more accurate.

For example, if the user equipment is at a cross location of the currently camped access network device and the neighboring access network device, both the access network device on which the user equipment currently camps and the neighboring access network device of the access network device on which the user equipment currently camps need to perform uplink measurement for the user equipment.

Specifically, for the structure of the access network device shown in FIG. 2, the user equipment 101 sends an uplink signal to six TRPs of the access network device 102 and six TRPs of the access network device 104. The six TRPs of the access network device 102 and the six TRPs of the access network device 104 separately receive the uplink signal sent by the user equipment 101. If the TRP does not have an uplink signal measurement function, but the DU has the uplink signal measurement function, the six TRPs of the access network device 102 send respective received signals to the corresponding DUs. The DUs of the access network device 102 receive the signals sent by the TRPs, and separately measure the signals sent by the TRPs. Each DU obtains two uplink signal measurement values, and then each DU sends the obtained two uplink signal measurement values to the CU of the access network device 102. The CU of the access network device 102 receives the uplink signal measurement values sent by each DU, to obtain six uplink signal measurement values. Likewise, the six TRPs of the access network device 104 send respective received signals to the corresponding DUs. The DUs of the access network device 104 receive the signals sent by the TRPs, and separately measure the signals sent by the TRPs. Each DU obtains two uplink signal measurement values, and then each DU sends the obtained two uplink signal measurement values to the CU of the access network device 104. The CU of the access network device 104 receives the uplink signal measurement values sent by each DU, and finally obtains six uplink signal measurement values. Then, the CU of the access network device 104 sends, by using the communications interface, the six uplink signal measurement values obtained by the CU of the access network device 104 to the CU of the access network device 102. The CU of the access network device 102 receives the six uplink signal measurement values sent by the CU of the access network device 104, and the CU of the access network device 102 finally obtains 12 uplink signal measurement values corresponding to the user equipment 101.

Alternatively, if the TRP has an uplink signal measurement function, the six TRPs of the access network device 102 separately measure the uplink signal sent by the user equipment 101. Each TRP obtains one uplink signal measurement value, and each TRP sends the uplink signal measurement value obtained by each TRP to a corresponding DU. Each DU obtains two uplink signal measurement values, and then each DU sends the obtained uplink signal measurement values to the CU of the access network device 102. The CU of the access network device 102 receives the uplink signal measurement values sent by each DU, to obtain six uplink signal measurement values. Likewise, the six TRPs of the access network device 104 separately measure the uplink signal sent by the user equipment 101. Each TRP obtains one uplink signal measurement value, and each TRP sends the uplink signal measurement value obtained by each TRP to a corresponding DU. Each DU obtains two uplink signal measurement values, and then each DU sends the obtained uplink signal measurement values to the CU of the access network device 104. The CU of the access network device 104 receives the uplink signal measurement values sent by each DU, to obtain six uplink signal measurement values. Then, the CU of the access network device 104 sends the obtained six uplink signal measurement values to the CU of the access network device 102 by using the communications interface. The CU of the access network device 102 receives the six uplink signal measurement values sent by the CU of the access network device 104, and finally obtains 12 uplink signal measurement values corresponding to the user equipment 101.

For the structure of the access network device shown in FIG. 3, the user equipment 101 sends an uplink signal to four TRPs of the access network device 102 and four TRPs of the access network device 104, and the four TRPs of the access network device 102 and the four TRPs of the access network device 104 separately receive the uplink signal sent by the user equipment 101. If the TRP does not have an uplink signal measurement function, but the controller has the uplink signal measurement function, the four TRPs of the access network device 102 send respective received signals to the controller of the access network device 102. The controller of the access network device 102 receives the signals sent by the four TRPs of the access network device 102, and separately measures the signals sent by the four TRPs. The controller of the access network device 102 obtains four uplink signal measurement values. Likewise, the four TRPs of the access network device 104 also send respective received signals to the controller of the access network device 104. The controller of the access network device 104 receives the signals sent by the four TRPs of the access network device 104, and separately measures the signals sent by the four TRPs, to obtain four uplink signal measurement values. Then, the controller of the access network device 104 sends the obtained four uplink signal measurement values to the controller of the access network device 102 by using the communications interface. The controller of the access network device 102 receives the four uplink signal measurement values sent by the controller of the access network device 104, and finally obtains eight uplink signal measurement values corresponding to the user equipment 101. Alternatively, if the TRP has an uplink signal measurement function, the four TRPs of the access network device 102 measure the uplink signal sent by the user equipment 101. Each TRP obtains one uplink signal measurement value, and each TRP sends the uplink signal measurement value obtained by each TRP to the controller of the access network device 102. The controller of the access network device 102 receives the uplink signal measurement value sent by each TRP, to obtain four uplink signal measurement values. Likewise, the four TRPs of the access network device 104 also measure the uplink signal sent by the user equipment 101. Each TRP obtains one uplink signal measurement value, and each TRP sends the uplink signal measurement value obtained by each TRP to the controller of the access network device 104. The controller of the access network device 104 receives the uplink signal measurement value sent by each TRP, to obtain four uplink signal measurement values. Then, the controller of the access network device 104 sends the obtained four uplink signal measurement values to the controller of the access network device 102 by using the communications interface. The controller of the access network device 102 receives the four uplink signal measurement values sent by the controller of the access network device 104, and finally obtains eight uplink signal measurement values corresponding to the user equipment 101.

S405. The access network device on which the user equipment currently camps determines whether the uplink signal measurement value corresponding to the user equipment meets a preset condition; and performs step S406 if the uplink signal measurement value corresponding to the user equipment meets the preset condition.

The preset condition may be that the uplink signal measurement value corresponding to the user equipment is less than or equal to a preset threshold. If there is one uplink signal measurement value, the preset condition is met when the uplink signal measurement value is less than or equal to the preset threshold. If there are a plurality of uplink signal measurement values, the preset condition is met only when all the plurality of uplink signal measurement values are less than or equal to the preset threshold. Herein, if the uplink signal measurement value is reference signal received power (English: Reference Signal Received Power, RSRP for short), the preset threshold may be, for example, -106 dBm. If the uplink signal measurement value is received signal code power (English: Received Signal Code Power, RSCP for short), the preset threshold may be, for example, -95 dBm. Alternatively, the preset condition may be that the uplink signal measurement value corresponding to the user equipment is less than or equal to a preset threshold within a period of time. The period of time herein may be 10 minutes. When the uplink signal measurement value is less than or equal to the preset threshold, the access network device on which the user equipment currently camps learns that the user equipment is far away from a coverage area of the access network device or the neighboring access network device of the access network device, and therefore the access network device on which the user equipment currently camps triggers the user equipment to perform downlink measurement. This can avoid a problem that the user equipment is disconnected.

It should be noted that the access network device may return to step S401 when determining that the uplink signal measurement value corresponding to the user equipment does not meet the preset condition.

S406. The access network device on which the user equipment currently camps sends a first instruction message to the user equipment, and the user equipment receives the first instruction message sent by the access network device on which the user equipment currently camps.

If the access network device determines that the uplink signal measurement value corresponding to the user equipment meets the preset condition, the access network device triggers the user equipment to switch to downlink signal measurement. The access network device sends the first instruction message to the user equipment, and the user equipment receives the first instruction message sent by the access network device. The first instruction message instructs the user equipment to start downlink signal measurement.

Specifically, in a first implementation, the access network device on which the user equipment currently camps needs to measure the uplink signal sent by the user equipment. In this case, for the structure of the access network device shown in FIG. 2, after obtaining the six uplink signal measurement values corresponding to the user equipment 101, the CU of the access network device 102 determines whether all the six uplink signal measurement values are less than or equal to the preset threshold. If all the six uplink signal measurement values are less than or equal to the preset threshold, the CU of the access network device 102 generates the first instruction message, and sends the first instruction message to a DU of the access network device 102. The DU sends the first instruction message to a TRP, and the TRP sends the first instruction message to the user equipment 101 by using an air interface. The DU that sends the first instruction message is selected by the CU of the access network device 102 according to a rule, and the rule includes but is not limited to lowest load.

In a second implementation, the access network device on which the user equipment currently camps and the neighboring access network device need to separately measure the uplink signal sent by the user equipment. In this case, for the structure of the access network device shown in FIG. 3, after obtaining the eight uplink signal measurement values corresponding to the user equipment 101, the controller of the access network device 102 determines whether all the eight uplink signal measurement values are less than or equal to the preset threshold. If all the eight uplink signal measurement values are less than or equal to the preset threshold, the controller of the access network device 102 generates the first instruction message, and sends the first instruction message to a TRP of the access network device 102. The TRP sends the first instruction message to the user equipment 101 by using an air interface. The TRP that sends the first instruction message is selected by the controller of the access network device 102 according to a rule, and the rule includes but is not limited to maximum transmit power.

Optionally, the first instruction message may be a message newly defined in a protocol, and the message may instruct the user equipment to perform downlink measurement.

Optionally, the first instruction message may carry instruction information. For example, the instruction information is a 1-byte indication bit. When the indication bit is set to 1, it indicates that the user equipment needs to start downlink signal measurement; or when the indication bit is set to 0, it indicates that the user equipment needs to start downlink signal measurement. After receiving the first instruction message, the user equipment may determine, only by parsing the indication bit in the first instruction message, whether the user equipment needs to perform downlink signal measurement, so that an operation is simple.

Optionally, the first instruction message further includes measurement configuration information of the access network device on which the user equipment currently camps and measurement configuration information of the neighboring access network device of the access network device on which the user equipment currently camps. After receiving the first instruction message, the user equipment obtains the measurement configuration information from the first instruction message, and then, performs downlink measurement for the access network device on which the user equipment currently camps, and performs downlink measurement for the neighboring access network device of the access network device on which the user equipment currently camps. The neighboring access network device may be an intra-frequency access network device of the access network device on which the user equipment currently camps, namely, an access network device whose operating frequency is the same as that of the access network device on which the user equipment currently camps. The neighboring access network device may be an inter-frequency access network device of the access network device on which the user equipment currently camps, namely, an access network device whose operating frequency is different from that of the access network device on which the user equipment currently camps. The neighboring access network device may be an intra-RAT access network device of the access network device on which the user equipment currently camps. Alternatively, the neighboring access network device may be an inter-RAT access network device of the access network device on which the user equipment currently camps. The access network device on which the user equipment currently camps adds the measurement configuration information to the first instruction message and sends the first instruction message to the user equipment. The user equipment receives the first instruction message that is sent by the currently camped access network device and that carries the measurement configuration information, and performs downlink measurement based on the measurement configuration information. Therefore, the user equipment does not need to further obtain the measurement configuration information from a broadcast message of the currently camped access network device, to improve efficiency of obtaining the measurement configuration information.

Optionally, the first instruction message further includes measurement report reporting event instruction information. After receiving the first instruction message, the user equipment obtains the measurement report reporting event instruction information from the first instruction message, and determines, based on a downlink measurement result and the measurement report reporting event instruction information, whether to send a measurement report to the access network device on which the user equipment currently camps. The measurement report reporting event instruction information in this embodiment of the present invention may be similar to an event (Event) A1 to an event A5 and an event B1 and an event B2 in an existing LTE system. The event A1 to the event A5 are intra-RAT intra-frequency/inter-frequency measurement events, and the event B1 and the event B2 are inter-RAT measurement events. The event A1 is that a measurement value of the access network device on which the user equipment currently camps is greater than a threshold, for example, RSRP is greater than the threshold or reference signal received quality (English: Reference Signal Received Quality, RSRQ for short) is greater than the threshold. The event A2 is that a measurement value of the access network device on which the user equipment currently camps is less than a threshold, for example, RSRP is less than the threshold or RSRQ is less than the threshold. The event A3 is that a measurement value of the neighboring access network device is greater, by a specific threshold, than a measurement value of the access network device on which the user equipment currently camps. The event A4 is that a measurement value of the neighboring access network device is greater than a threshold. The event A5 is that a measurement value of the access network device on which the user equipment currently camps is less than a threshold 1, and channel quality of the neighboring access network device is greater than a threshold 2. Inter-RAT measurement events include: the event B1, that is, channel quality of an inter-RAT neighboring access network device is greater than a threshold; and the event B2, that is, channel quality of the access network device on which the user equipment currently camps is less than a threshold 1, and channel quality of an inter-RAT neighboring access network device is greater than a threshold 2. When the measurement result of the user equipment meets a measurement event, the user equipment fills the measurement result in a measurement report (Measurement Report) message, and sends the measurement report message to the access network device on which the user equipment currently camps. The access network device on which the user equipment currently camps receives the measurement report message sent by the user equipment, and learns of the downlink measurement result of the user equipment from the measurement report message.

Optionally, the first instruction message may further include timer information. The timer information is used to indicate duration for performing downlink measurement by the user equipment. When the timer duration is reached, if reporting of the measurement report is not triggered, the user equipment stops downlink measurement, to better save power of the user equipment.

Optionally, the first instruction message includes but is not limited to an RRC reconfiguration message, a measurement configuration message, or a paging message.

S407. The user equipment performs downlink signal measurement based on the first instruction message.

Specifically, after receiving the first instruction message, the user equipment starts downlink measurement, and the user equipment may obtain the measurement configuration information from a system message that is broadcast by the access network device on which the user equipment currently camps. Alternatively, the user equipment may obtain the measurement configuration information from the first instruction message sent by the access network device on which the user equipment currently camps. After obtaining the measurement configuration information, the user equipment performs measurement for the access network device on which the user equipment currently camps, and performs downlink measurement for a neighboring intra-frequency access network device, inter-frequency access network device, inter-RAT access network device, or the like.

When starting downlink measurement, the user equipment can measure both a downlink signal sent by an access network device that has an uplink measurement capability and a downlink signal sent by an access network device that does not have the uplink measurement capability. Therefore, when performing downlink measurement, the user equipment may obtain signal strength of each access network device around an area in which the user equipment is currently located. When a downlink signal measurement value of the user equipment for the currently camped access network device is less than a downlink signal measurement value for another access network device, the user equipment reports the measurement result to the currently camped access network device. The access network device receives the measurement result sent by the user equipment, and triggers the user equipment to be handed over to another access network device with a good signal. This can avoid a problem that the user equipment is disconnected because the user equipment moves out of a coverage area of the access network device that supports an uplink signal measurement manner.

It should be noted that this embodiment is described for the first application scenario of the communications architecture shown in FIG. 1, and this embodiment of the present invention is also applicable to the second application scenario of the communications architecture shown in FIG. 1. Specifically, the related descriptions of the access network device on which the user equipment currently camps in the embodiment shown in FIG. 4 are corresponding to the micro base station on which the user equipment currently camps in the second application scenario in the embodiment in FIG. 1. The related descriptions of the neighboring access network device of the access network device on which the user equipment currently camps in the embodiment shown in FIG. 4 are corresponding to the macro base station in the communications architecture shown in FIG. 1 in the second application scenario. For example, the user equipment sends an uplink signal to the currently camped micro base station, and the micro base station on which the user equipment currently camps receives the uplink signal sent by the user equipment; the micro base station on which the user equipment currently camps obtains an uplink signal measurement value corresponding to the user equipment; when the micro base station determines that the uplink signal measurement value corresponding to the user equipment meets a preset condition, the micro base station on which the user equipment currently camps sends a first instruction message to the user equipment, and the user equipment receives the first instruction message sent by the micro base station; and the user equipment starts downlink measurement based on the first instruction message. When performing downlink measurement, the user equipment can detect a signal of the macro base station, and therefore is handed over to the macro base station.

Optionally, when the user equipment moves from a coverage area of an access network device that does not support uplink measurement to a coverage area of an access network device that supports uplink measurement, or when the user equipment completes movement between the macro base station and the micro base station in the foregoing NR BR, the access network device or base station on which the user equipment currently camps can send an instruction message to the user equipment, to instruct the user equipment to switch to uplink measurement. The user equipment receives the instruction message sent by the currently camped access network device or base station, to stop downlink measurement and send the uplink signal.

Based on the foregoing steps, the access network device on which the user equipment currently camps obtains the uplink signal measurement value corresponding to the user equipment; and when the uplink signal measurement value meets the preset condition, the access network device on which the user equipment currently camps sends the first instruction message to the user equipment, and the user equipment receives the first instruction message sent by the access network device, and performs downlink signal measurement based on the first instruction message. Therefore, in a scenario in which the access network device performs uplink signal measurement, the user equipment can perform downlink measurement based on the first instruction message sent by the access network device on which the user equipment currently camps, to avoid a problem that the user equipment is disconnected because the user equipment moves out of a coverage area of the access network device that supports an uplink signal measurement manner.

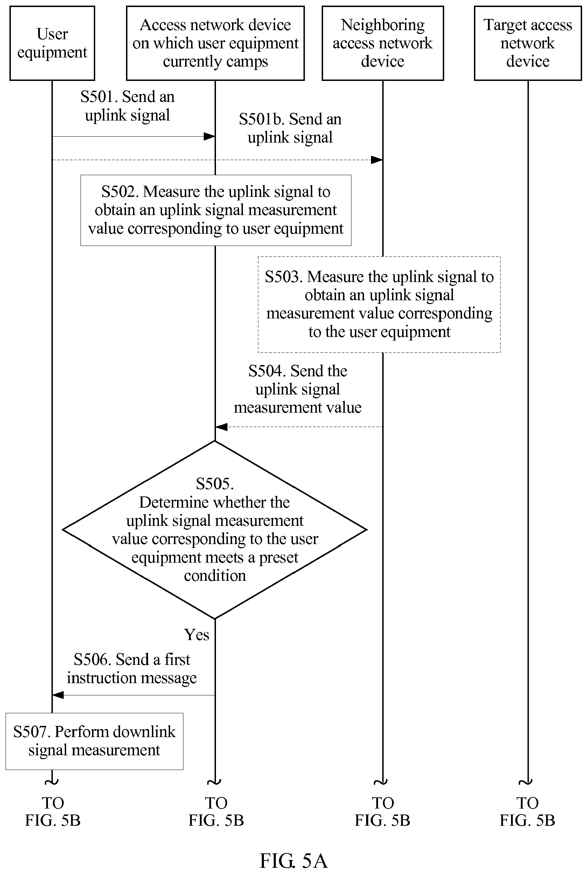

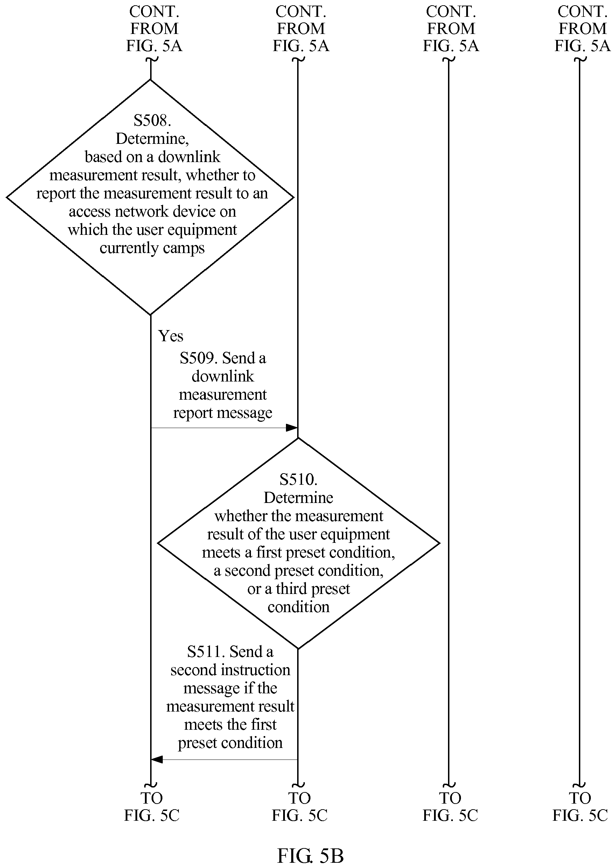

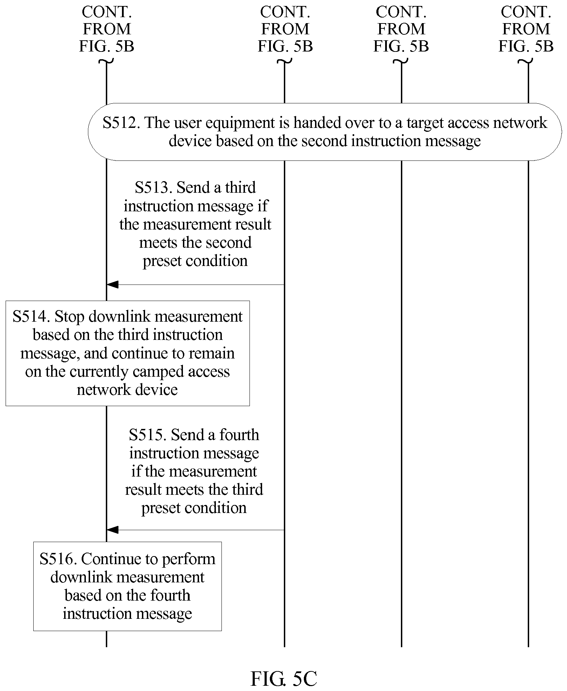

FIG. 5A, FIG. 5B, and FIG. 5C are a schematic flowchart of Embodiment 2 of a signal measurement method according to an embodiment of the present invention. The method includes but is not limited to the following steps.

S501. User equipment sends an uplink signal to an access network device on which the user equipment currently camps. The access network device on which the user equipment currently camps receives the uplink signal sent by the user equipment.

Optionally, after step S501 and before step S505, the method further includes step S501b: The user equipment sends an uplink signal to a neighboring access network device of the access network device on which the user equipment currently camps. The neighboring access network device receives the uplink signal sent by the user equipment.

It should be noted that step S501 and step S501b may be simultaneously performed.

S502. The access network device on which the user equipment currently camps measures the uplink signal sent by the user equipment, to obtain an uplink signal measurement value corresponding to the user equipment.

The access network device on which the user equipment currently camps measures the uplink signal sent by the user equipment. A measurement value obtained through measurement by the access network device on which the user equipment currently camps is the uplink signal measurement value corresponding to the user equipment.

Optionally, after step S501 and before step S505, the method further includes steps S503 and S504. S503. The neighboring access network device measures the uplink signal sent by the user equipment, to obtain an uplink signal measurement value corresponding to the user equipment. S504. The neighboring access network device sends the obtained uplink signal measurement value to the access network device on which the user equipment currently camps. The neighboring access network device sends the obtained uplink signal measurement value to the access network device on which the user equipment currently camps. The access network device on which the user equipment currently camps receives the uplink signal measurement value sent by the neighboring access network device, and determines, as the uplink signal measurement value corresponding to the user equipment, the uplink signal measurement value obtained by the access network device through measurement and the uplink signal measurement value received from the neighboring access network device.

S505. The access network device on which the user equipment currently camps determines whether the uplink signal measurement value corresponding to the user equipment meets a preset condition; and performs step S506 if the uplink signal measurement value corresponding to the user equipment meets the preset condition.

It should be noted that the access network device may return to step S501 when determining that the uplink signal measurement value corresponding to the user equipment does not meet the preset condition.

S506. The access network device on which the user equipment currently camps sends a first instruction message to the user equipment, and the user equipment receives the first instruction message sent by the access network device on which the user equipment currently camps.

The first instruction information is used to instruct the user equipment to start downlink measurement.

S507. The user equipment performs downlink signal measurement based on the first instruction message.

For implementation processes of steps S501 to S507 in this embodiment of the present invention, refer to the implementation processes of steps S401 to S407 in the embodiment shown in FIG. 4. Details are not described herein again.

S508. The user equipment determines, based on a downlink measurement result, whether to report the measurement result to the access network device on which the user equipment currently camps; and if the user equipment determines to report the measurement result to the access network device on which the user equipment currently camps, the user equipment performs step S509; or if the user equipment determines not to report the measurement result to the access network device on which the user equipment currently camps, the user equipment does not report the measurement result.

Specifically, the first instruction message further includes measurement report reporting event instruction information. After receiving the first instruction message, the user equipment obtains the measurement report reporting event instruction information from the first instruction message, and determines, based on the downlink measurement result and the measurement report reporting event instruction information, whether to report the measurement result to the access network device on which the user equipment currently camps. The measurement report reporting event instruction information includes but is not limited to an event A1 to an event A5 and an event B1 and an event B2. The event A1 is that a measurement value of the access network device on which the user equipment currently camps is greater than a threshold, for example, RSRP is greater than the threshold or RSRQ is greater than the threshold. The event A2 is that a measurement value of the access network device on which the user equipment currently camps is less than a threshold, for example, RSRP is less than the threshold or RSRQ is less than the threshold. The event A3 is that a measurement value of the neighboring access network device is greater, by a specific threshold, than a measurement value of the access network device on which the user equipment currently camps. The event A4 is that a measurement value of the neighboring access network device is greater than a threshold. The event A5 is that a measurement value of the access network device on which the user equipment currently camps is less than a threshold 1, and channel quality of the neighboring access network device is greater than a threshold 2. Inter-RAT measurement events include: the event B1, that is, channel quality of an inter-RAT neighboring access network device is greater than a threshold; and the event B2, that is, channel quality of the access network device on which the user equipment currently camps is less than a threshold 1, and channel quality of an inter-RAT neighboring access network device is greater than a threshold 2. In addition to the foregoing measurement events, the measurement report reporting event instruction information may further include another measurement event, for example, a measurement value of the access network device on which the user equipment currently camps is greater than a measurement value of the neighboring access network device by a specific threshold.

For example, the access network device on which the user equipment currently camps is an NR BS, and an access network device adjacent to the NR BS includes a base station that does not have an uplink measurement capability, for example, an eNodeB in an LTE system. In this case, when a measurement result of the user equipment for the eNodeB is better than a measurement result of the user equipment for the NR BS by a threshold (this matches the event A3), the user equipment determines that the user equipment needs to report the measurement result to the currently camped NR BS. Alternatively, when a measurement result of the user equipment for the eNodeB is greater than a threshold (this matches the event A4), the user equipment determines that the user equipment needs to report the measurement result to the currently camped NR BS. Alternatively, when a measurement result of the user equipment for the NR BS is greater than a threshold (this matches the event A1), the user equipment determines that the user equipment needs to report the measurement result to the currently camped NR BS.

When the downlink measurement result of the user equipment meets a measurement event, the user equipment fills the measurement result in a measurement report (Measurement Report) message, and sends the measurement report message to the access network device on which the user equipment currently camps. The access network device on which the user equipment currently camps receives the measurement report message sent by the user equipment. The measurement report message includes a measurement value of the user equipment and an identifier of the access network device corresponding to the measurement value. The access network device on which the user equipment currently camps learns of the downlink measurement value of the user equipment from the measurement report message.

When the measurement result of the user equipment matches none of the measurement events listed in the measurement report reporting event instruction information, the user equipment determines not to report the measurement result.

Optionally, the first instruction message may further include timer information. The timer information is used to indicate duration for performing downlink measurement by the user equipment. When the timer duration is reached, if reporting of the measurement result is not triggered, the user equipment stops downlink measurement, to better save power of the user equipment.

S509. The user equipment sends a downlink measurement report message to the access network device on which the user equipment currently camps, and the access network device on which the user equipment currently camps receives the downlink measurement report message sent by the user equipment.

S510. The access network device on which the user equipment currently camps determines, based on the downlink measurement report message, whether the downlink measurement result of the user equipment meets a first preset condition, a second preset condition, or a third preset condition; and performs step S511 if the downlink measurement result meets the first preset condition; performs step S513 if the downlink measurement result meets the second preset condition; or performs step S515 if the downlink measurement result meets the third preset condition.

The first preset condition includes but is not limited to: A measurement value of the user equipment for the currently camped access network device is less, by a threshold, than a measurement value of the user equipment for a target access network device that does not have a downlink measurement capability, or a measurement value of the user equipment for a target access network device that does not have a downlink measurement capability is greater than a threshold. The target access network device is corresponding to the access network device 103 in the network architecture shown in FIG. 1.

The second preset condition includes but is not limited to: A measurement value of the user equipment for the currently camped access network device is greater than a threshold, or a measurement value of the user equipment for the currently camped access network device is greater, by a threshold, than a measurement value of the user equipment for a target access network device that does not have a downlink measurement capability.

The third preset condition includes but is not limited to: Both a measurement value of the user equipment for the currently camped access network device and a measurement value of the user equipment for the neighboring access network device of the currently camped access network device are less than a threshold. The neighboring access network device of the access network device on which the user equipment currently camps includes an access network device that has a downlink measurement capability and/or an access network device that does not have the downlink measurement capability.

S511. The access network device on which the user equipment currently camps sends a second instruction message to the user equipment, and the user equipment receives the second instruction message sent by the access network device on which the user equipment currently camps.

The second instruction message carries an identifier of the target access network device, and the identifier of the target access network device is used to instruct the user equipment to be handed over from the currently camped access network device to the target access network device based on the identifier of the target access network device. Optionally, the second instruction message may further carry a message type. In this embodiment of the present invention, the message type carried in the second instruction message is a handover type. Optionally, the second instruction message may further carry an indication bit used to instruct the user equipment to be handed over. For example, when the indication bit is set to 1 or 0, it indicates that the user equipment needs to be handed over. The second instruction message includes but is not limited to an RRC reconfiguration message or a paging message.

S512. The user equipment is handed over to a target access network device based on the second instruction message.

For example, the access network device on which the user equipment currently camps is an NR BS, and an access network device adjacent to the NR BS includes an eNodeB in an LTE network. When a measurement result of the user equipment for the eNodeB is better than a measurement result of the user equipment for the NR BS by a threshold, or when a measurement result of the user equipment for the eNodeB is greater than a threshold, the NR BS sends the second instruction message to the user equipment, to trigger the user equipment to move to the eNodeB, and trigger the user equipment to stop sending the uplink signal.

Specifically, if the user equipment is in an active (ACTIVE) mode, the NR BS sends an RRC reconfiguration message to the user equipment, to trigger the user equipment to initiate a handover process. The user equipment receives the RRC reconfiguration message sent by the NR BS, initiates a random access process to the eNodeB based on the RRC reconfiguration message, and then returns an RRC reconfiguration complete message to the eNodeB to be handed over to the eNodeB. Alternatively, if the user equipment is not in an active mode, the NR BS sends a paging message to the user equipment, to trigger the user equipment to enter the active state. The user equipment receives the paging message sent by the NR BS, enters the active state, and then initiates the foregoing handover process to be handed over to the eNodeB. Alternatively, if the user equipment is not in an active state, when a measurement value meets a threshold, or when the NR BS notifies the user equipment by using a paging message, the user equipment may initiate a tracking area update (English: Tracking Area Update, TAU for short) process on the eNodeB, initiate a TAU request message to the eNodeB, and be handed over to the eNodeB by using the TAU process.

S513. The access network device on which the user equipment currently camps sends a third instruction message to the user equipment, and the user equipment receives the third instruction message sent by the access network device on which the user equipment currently camps.

The third instruction message is used to instruct the user equipment to stop downlink measurement, and continue to remain on the currently camped access network device. Optionally, the third instruction message may further carry an indication bit used to instruct the user equipment to stop downlink measurement. For example, when the indication bit is set to 1 or 0, it indicates that the user equipment needs to stop downlink measurement. The third instruction message includes but is not limited to an RRC reconfiguration message or a paging message.

S514. The user equipment stops downlink measurement based on the third instruction message, and continues to remain on the currently camped access network device.

For example, the access network device on which the user equipment currently camps is an NR BS, and an access network device adjacent to the NR BS includes an eNodeB in an LTE network. When a measurement result of the user equipment for the NR BS is better than a measurement result of the user equipment for the eNodeB by a threshold, or when a measurement result of the user equipment for the NR BS is greater than a threshold, the NR BS sends the third instruction message to the user equipment, to instruct the user equipment to stop downlink measurement and remain on the NR BS. Alternatively, when the user equipment determines that the measurement result meets the event, after reporting the measurement result, the user equipment may automatically stop downlink measurement, and continue to remain on the NR BS.

S515. The access network device on which the user equipment currently camps sends a fourth instruction message to the user equipment, and the user equipment receives the fourth instruction message sent by the access network device on which the user equipment currently camps.

The fourth instruction message is used to instruct the user equipment to continue to perform downlink measurement. Optionally, the fourth instruction message may further carry an indication bit used to instruct the user equipment to continue to perform downlink measurement. For example, when the indication bit is set to 1 or 0, it indicates that the user equipment needs to continue to perform downlink measurement. The fourth instruction message includes but is not limited to an RRC reconfiguration message or a paging message.

S516. The user equipment continues to perform downlink measurement based on the fourth instruction message.

For example, the access network device on which the user equipment currently camps is an NR BS, and an access network device adjacent to the NR BS includes an eNodeB in an LTE network. When both a measurement result of the user equipment for the NR BS and a measurement result of the user equipment for the neighboring access network device of the NR BS are less than a threshold, the NR BS sends the fourth instruction message to the user equipment, to instruct the user equipment to maintain downlink measurement after the user equipment reports a measurement report, until another measurement event is triggered or the user equipment receives other instruction information for instructing the user equipment to stop downlink measurement. Alternatively, when the user equipment determines that the measurement result meets the event, the user equipment may automatically maintain downlink measurement after reporting the measurement result, until another measurement event is triggered or the user equipment receives other instruction information for instructing the user equipment to stop downlink measurement.

Optionally, the user equipment may continue to send the uplink signal while performing downlink measurement. When a result obtained through measurement by the access network device on which the user equipment currently camps is greater than a threshold, the user equipment may be directly instructed to remain on the access network device on which the user equipment currently camps, and stop downlink measurement.

Based on the foregoing steps, the access network device on which the user equipment currently camps obtains the uplink signal measurement value corresponding to the user equipment; when the uplink signal measurement value meets the preset condition, the access network device on which the user equipment currently camps sends the first instruction message to the user equipment, and the user equipment receives the first instruction message sent by the access network device, and performs downlink signal measurement based on the first instruction message; and when the downlink measurement result meets a measurement event, the user equipment sends the measurement result to the currently camped access network device, and the access network device on which the user equipment currently camps receives the measurement result sent by the user equipment, and triggers, based on the measurement result, the user equipment to be handed over to another access network device or continue to remain on the current access network device. Therefore, in a scenario in which the access network device performs uplink signal measurement, the user equipment can perform downlink measurement based on the first instruction message sent by the access network device on which the user equipment currently camps, to avoid a problem that the user equipment is disconnected because the user equipment moves out of a coverage area of the access network device that supports an uplink signal measurement manner.

To facilitate better implementation of the signal measurement method in the embodiments of the present invention, the present invention further provides a related device for implementing the method.

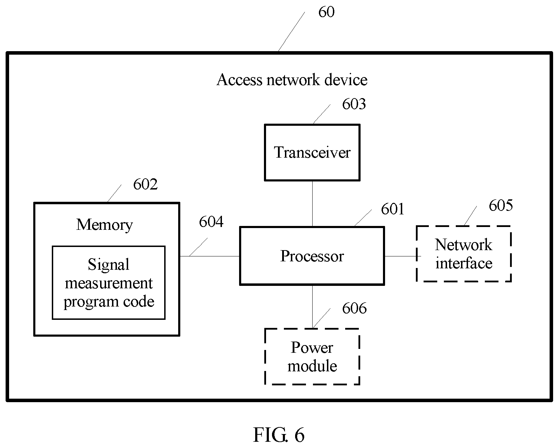

FIG. 6 is a schematic structural diagram of Embodiment 1 of an access network device according to an embodiment of the present invention. As shown in FIG. 6, the access network device 60 is an access network device on which user equipment currently camps, and the access network device 60 includes a processor 601, a memory 602, a transceiver 603, and a bus 604. The processor 601, the memory 602, and the transceiver 603 may be connected by using the bus or in another manner. For example, the connection is implemented by using the bus 604 in FIG. 6.

Optionally, the access network device 60 may further include a network interface 605 and a power module 606.

The processor 601 may be a digital signal processing (English: Digital Signal Processing, DSP for short) chip. The processor 601 is configured to: manage a radio channel, control cross-cell handover of the user equipment in a local control area, and so on. In specific implementation, the processor 601 may include a module for speech channel switching and information exchange, a module configured to complete call processing, signaling processing, radio resource management, radio link management, and circuit maintenance functions, and a module configured to complete multiplexing/demultiplexing and transcoding functions. For detailed information, refer to knowledge related to mobile communications.

The memory 602 is configured to store an instruction. In specific implementation, the memory 602 may be a read memory (English: Read-Only Memory, ROM for short) or a random access memory (English: Random Access Memory, RAM for short). In this embodiment of the present invention, the memory 602 is configured to store signal measurement program code. The processor 601 is configured to read and execute the signal measurement program code stored in the memory 602.

The transceiver 603 is configured to transmit, for example, modulate a mobile communication signal generated by the processor 601, and is further configured to receive, for example, demodulate a mobile communication signal received by an antenna.

The bus 604 may be an industry standard architecture (English: Industry Standard Architecture, ISA for short) bus, a peripheral component interconnect (English: Peripheral Component Interconnect, PCI for short) bus, an extended industry standard architecture (English: Extended Industry Standard Architecture, EISA for short) bus, an integrated circuit (English: Inter Integrated Circuit, IIC for short) bus, or the like.

The network interface 605 is used by the access network device 60 to perform data communication with the user equipment.

The power module 606 is configured to supply power to the modules in the access network device 60.

In this embodiment of the present invention, the processor 601 is further configured to invoke the signal measurement program code in the memory 602 to perform the following operations:
obtaining an uplink signal measurement value corresponding to the user equipment; and
when the uplink signal measurement value meets a preset condition, sending a first instruction message to the user equipment by using the transceiver 603, where the first instruction message is used to instruct the user equipment to perform downlink signal measurement.

Based on the foregoing operations, the access network device obtains the uplink signal measurement value corresponding to the user equipment; and when the uplink signal measurement value meets the preset condition, the access network device sends the first instruction message to the user equipment, and the user equipment performs downlink signal measurement based on the first instruction message. Therefore, in a scenario in which the access network device performs uplink signal measurement, the user equipment can perform downlink measurement based on the first instruction message sent by the access network device, to avoid a problem that the user equipment is disconnected because the user equipment moves out of a coverage area of the access network device that supports an uplink signal measurement manner.

Specifically, the uplink signal measurement value includes an uplink signal measurement value obtained after the access network device on which the user equipment currently camps measures an uplink signal sent by the user equipment.

Optionally, the uplink signal measurement value further includes an uplink signal measurement value obtained after a neighboring access network device of the access network device on which the user equipment currently camps measures the uplink signal sent by the user equipment.

Optionally, the preset condition is that the uplink signal measurement value is less than or equal to a preset threshold.

Optionally, the first instruction message includes instruction information, and the instruction information is used to instruct the user equipment to perform downlink signal measurement.

Optionally, the first instruction message further includes measurement configuration information of the neighboring access network device of the access network device on which the user equipment currently camps, and the measurement configuration information is used to instruct the user equipment to measure, based on the measurement configuration information, a downlink signal sent by the neighboring access network device.

Optionally, the first instruction message includes an RRC reconfiguration message, a measurement configuration message, or a paging message.

It should be noted that for functions of the function modules in the access network device 60 described in this embodiment of the present invention, refer to the related descriptions of the corresponding access network device on which the user equipment currently camps in the embodiment shown in FIG. 4, or FIG. 5A, FIG. 5B, and FIG. 5C. Details are not described herein again.

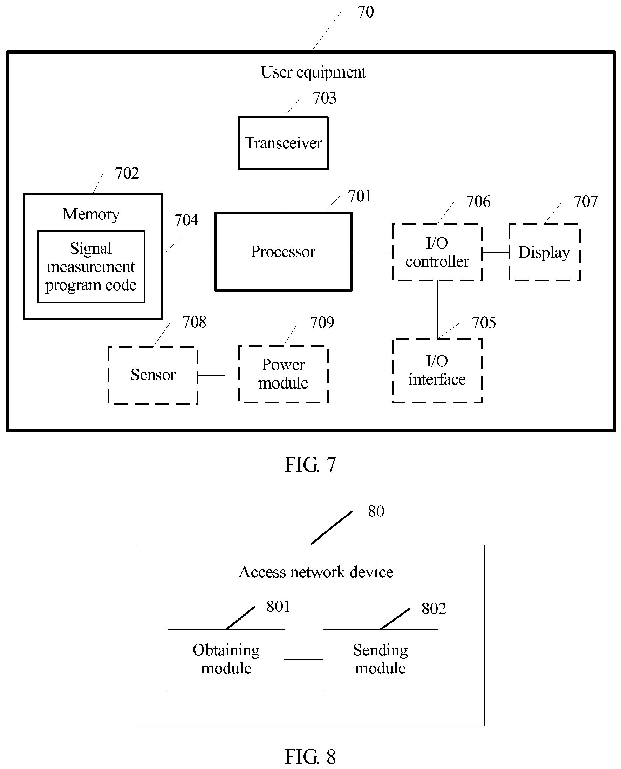

FIG. 7 is a schematic structural diagram of Embodiment 1 of user equipment according to an embodiment of the present invention. As shown in FIG. 7, the user equipment 70 includes a processor 701, a memory 702, a transceiver 703, and a bus 704. The processor 701, the memory 702, and the transceiver 703 may be connected by using the bus or in another manner. For example, the connection is implemented by using the bus 704 in FIG. 7.

Optionally, the user equipment 70 may further include an input/output (English: Input/Output, I/O for short) interface 705, an I/O controller 706, a display 707, a sensor 708, and a power module 709.

The processor 701 may be a general purpose processor, for example, a central processing unit (English: Central Processing Unit, CPU for short), and is configured to run operating system software, required application program software, and the like of the user equipment 70. The processor 701 can process data received by using the transceiver 703. The processor 701 can further send processed data to the transceiver 703 for wireless transmission.

The memory 702 is configured to store an instruction, and the memory 702 may include a volatile memory (English: Volatile Memory), for example, a RAM. Alternatively, the memory 702 may include a nonvolatile memory (English: Nonvolatile Memory), for example, a ROM, a hard disk (English: Hard Disk Drive, HDD for short), or a solid-state drive (English: Solid-State Drive, SSD for short). Alternatively, the memory 702 may include a combination of the foregoing types of memories. In this embodiment of the present invention, the memory 702 is configured to store signal measurement program code. The processor 701 is configured to read and execute the signal measurement program code stored in the memory 702.

The transceiver 703 provides a communication function for the user equipment 70, is configured to transmit, for example, amplify, modulate, or code a mobile communication signal generated by the processor 701, and is further configured to receive, for example, demodulate or decode a mobile communication signal received by an antenna.

The bus 704 may be an ISA bus, a PCI bus, an EISA bus, an IIC bus, or the like.

The I/O interface 705 is an external interface of the user equipment 70, and includes one or more of a Universal Serial Bus (English: Universal Serial Bus, USB for short) interface, a secure digital card (English: Secure Digital card, SD for short) interface, a push-button interface, and the like.

The I/O controller 706 is configured to control data exchange between various input/output devices in the user equipment 70. The data exchange especially includes data exchange between the processor 701, the I/O interface 705, and the display 707.

The display 707 is a display screen and a touchscreen in the user equipment 70. The display 707 is configured to display a software running status, a power status, time, a user configuration interface, and a configuration result of the user equipment 70. The touchscreen is configured to: receive a user touch operation, and convert the user touch operation into a user operation instruction.

The sensor 708 is various sensor devices, including one or more of a global positioning system (English: Global Positioning System, GPS for short) module, a gravity sensor, an acceleration sensor, a distance sensor, a camera, an optical sensor, and the like.

The power module 709 supplies power to the modules in the user equipment 70.

In this embodiment of the present invention, the processor 701 is mainly configured to invoke the signal measurement program stored in the memory 702 to perform the following operations:
receiving, by using the transceiver 703, a first instruction message sent by an access network device on which the user equipment 70 currently camps, where the first instruction message is sent by the access network device when an uplink signal measurement value corresponding to the user equipment meets a preset condition; and
performing downlink signal measurement based on the first instruction message.

Based on the foregoing operations, in a scenario in which the access network device performs uplink signal measurement, the user equipment can perform downlink measurement based on the first instruction message sent by the access network device, to avoid a problem that the user equipment is disconnected because the user equipment moves out of a coverage area of the access network device that supports an uplink signal measurement manner.

Specifically, the uplink signal measurement value includes an uplink signal measurement value obtained after the access network device on which the user equipment currently camps measures an uplink signal sent by the user equipment.

Optionally, the uplink signal measurement value further includes an uplink signal measurement value obtained after a neighboring access network device of the access network device on which the user equipment currently camps measures the uplink signal sent by the user equipment.

Optionally, the preset condition is that the uplink signal measurement value is less than or equal to a preset threshold.

Optionally, the first instruction message includes instruction information, and the instruction information is used to instruct the user equipment to perform downlink signal measurement.

Optionally, the first instruction message further includes measurement configuration information of the neighboring access network device of the access network device on which the user equipment currently camps, and the measurement configuration information is used to instruct the user equipment to measure, based on the measurement configuration information, a downlink signal sent by the neighboring access network device.

Optionally, the first instruction message includes an RRC reconfiguration message, a measurement configuration message, or a paging message.

It should be noted that for functions of the function modules in the user equipment 70 described in this embodiment of the present invention, refer to the related descriptions of the corresponding user equipment in the embodiment shown in FIG. 4, or FIG. 5A, FIG. 5B, and FIG. 5C. Details are not described herein again.

FIG. 8 is a schematic structural diagram of Embodiment 2 of an access network device according to an embodiment of the present invention. As shown in FIG. 8, the access network device 80 is an access network device on which user equipment currently camps, and the access network device 80 includes an obtaining module 801 and a sending module 802.

The obtaining module 801 is configured to obtain an uplink signal measurement value corresponding to the user equipment.

The sending module 802 is configured to: when the uplink signal measurement value meets a preset condition, send a first instruction message to the user equipment, where the first instruction message is used to instruct the user equipment to perform downlink signal measurement.

The access network device obtains the uplink signal measurement value corresponding to the user equipment; and when the uplink signal measurement value meets the preset condition, the access network device sends the first instruction message to the user equipment, and the user equipment performs downlink signal measurement based on the first instruction message. Therefore, in a scenario in which the access network device performs uplink signal measurement, the user equipment can perform downlink measurement based on the first instruction message sent by the access network device, to avoid a problem that the user equipment is disconnected because the user equipment moves out of a coverage area of the access network device that supports an uplink signal measurement manner.

It should be noted that for functions of the function modules in the access network device 80 described in this embodiment of the present invention, refer to the related descriptions of the corresponding access network device on which the user equipment currently camps in the embodiment shown in FIG. 4, or FIG. 5A, FIG. 5B, and FIG. 5C. Details are not described herein again.

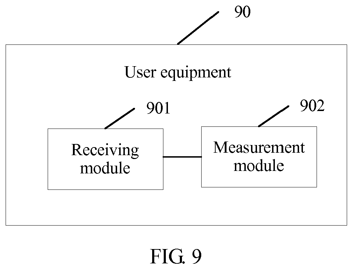

FIG. 9 is a schematic structural diagram of Embodiment 2 of user equipment according to an embodiment of the present invention. As shown in FIG. 9, the user equipment 90 includes a receiving module 901 and a measurement module 902.

The receiving module 901 is configured to receive a first instruction message sent by an access network device on which the user equipment currently camps, where the first instruction message is sent by the access network device when an uplink signal measurement value corresponding to the user equipment meets a preset condition.

The measurement module 902 is configured to perform downlink signal measurement based on the first instruction message.

In a scenario in which the access network device performs uplink signal measurement, the user equipment can perform downlink measurement based on the first instruction message sent by the access network device, to avoid a problem that the user equipment is disconnected because the user equipment moves out of a coverage area of the access network device that supports an uplink signal measurement manner.

It should be noted that for functions of the function modules in the user equipment 90 described in this embodiment of the present invention, refer to the related descriptions of the corresponding user equipment in the embodiment shown in FIG. 4, or FIG. 5A, FIG. 5B, and FIG. 5C. Details are not described herein again.

Persons of ordinary skill in the art may understand that all or some of the steps of the method embodiments may be implemented by a program instructing relevant hardware. The program may be stored in a computer-readable storage medium. When the program is executed, the steps of the method embodiments are performed. The storage medium includes any medium that can store program code, such as a ROM, a RAM, a magnetic disk, or an optical disc.

Finally, it should be noted that the foregoing embodiments are merely intended for describing the technical solutions in the present invention, but not for limiting the present invention. Although the present invention is described in detail with reference to the foregoing embodiments, persons of ordinary skill in the art should understand that they may still make modifications to the technical solutions recorded in the foregoing embodiments or make equivalent replacements to some or all technical features thereof, without departing from the scope of the technical solutions in the embodiments of the present invention.

## Claims

1. A signal measurement method, comprising:
obtaining, by an access network device on which user equipment currently camps, an uplink signal measurement value corresponding to the user equipment; and
when the uplink signal measurement value meets a preset condition, sending, by the access network device, a first instruction message to the user equipment, wherein the first instruction message is used to instruct the user equipment to perform downlink signal measurement.

2. The method according to claim 1, wherein the uplink signal measurement value comprises an uplink signal measurement value obtained after the access network device measures an uplink signal sent by the user equipment.

3. The method according to claim 2, wherein the uplink signal measurement value further comprises an uplink signal measurement value obtained after a neighboring access network device of the access network device measures the uplink signal sent by the user equipment.

4. The method according to any one of claims 1 to 3, wherein the preset condition is that the uplink signal measurement value is less than or equal to a preset threshold.

5. The method according to any one of claims 1 to 4, wherein the first instruction message further comprises measurement configuration information of the neighboring access network device of the access network device, and the measurement configuration information is used to instruct the user equipment to measure, based on the measurement configuration information, a downlink signal sent by the neighboring access network device.

6. The method according to any one of claims 1 to 5, wherein the first instruction message comprises a radio resource control RRC reconfiguration message, a measurement configuration message, or a paging message.

7. A signal measurement method, comprising:
receiving, by user equipment, a first instruction message sent by an access network device on which the user equipment currently camps, wherein the first instruction message is sent by the access network device when an uplink signal measurement value corresponding to the user equipment meets a preset condition; and
performing, by the user equipment, downlink signal measurement based on the first instruction message.

8. The method according to claim 7, wherein the uplink signal measurement value comprises an uplink signal measurement value obtained after the access network device measures an uplink signal sent by the user equipment.

9. The method according to claim 8, wherein the uplink signal measurement value further comprises an uplink signal measurement value obtained after a neighboring access network device of the access network device measures the uplink signal sent by the user equipment.

10. The method according to any one of claims 7 to 9, wherein the preset condition is that the uplink signal measurement value is less than or equal to a preset threshold.

11. The method according to any one of claims 7 to 10, wherein the first instruction message further comprises measurement configuration information of the neighboring access network device of the access network device, and the measurement configuration information is used to instruct the user equipment to measure, based on the measurement configuration information, a downlink signal sent by the neighboring access network device.

12. The method according to any one of claims 7 to 11, wherein the first instruction message comprises a radio resource control RRC reconfiguration message, a measurement configuration message, or a paging message.

13. An access network device, wherein the access network device is an access network device on which user equipment currently camps, and the access network device comprises:
a transceiver;
a memory, configured to store an instruction; and
a processor, separately connected to the memory and the transceiver, and configured to execute the instruction to perform the following steps when executing the instruction:
obtaining an uplink signal measurement value corresponding to the user equipment; and
when the uplink signal measurement value meets a preset condition, sending a first instruction message to the user equipment by using the transceiver, wherein the first instruction message is used to instruct the user equipment to perform downlink signal measurement.

14. The access network device according to claim 13, wherein the uplink signal measurement value comprises an uplink signal measurement value obtained after the access network device measures an uplink signal sent by the user equipment.

15. The access network device according to claim 14, wherein the uplink signal measurement value further comprises an uplink signal measurement value obtained after a neighboring access network device of the access network device measures the uplink signal sent by the user equipment.

16. The access network device according to any one of claims 13 to 15, wherein the preset condition is that the uplink signal measurement value is less than or equal to a preset threshold.

17. The access network device according to any one of claims 13 to 16, wherein the first instruction message further comprises measurement configuration information of the neighboring access network device of the access network device, and the measurement configuration information is used to instruct the user equipment to measure, based on the measurement configuration information, a downlink signal sent by the neighboring access network device.

18. The access network device according to any one of claims 13 to 17, wherein the first instruction message comprises a radio resource control RRC reconfiguration message, a measurement configuration message, or a paging message.

19. User equipment, comprising:
a transceiver;
a memory, configured to store an instruction; and
a processor, separately connected to the memory and the transceiver, and configured to execute the instruction to perform the following steps when executing the instruction:
receiving, by using the transceiver, a first instruction message sent by an access network device on which the user equipment currently camps, wherein the first instruction message is sent by the access network device when an uplink signal measurement value corresponding to the user equipment meets a preset condition; and
performing downlink signal measurement based on the first instruction message.

20. The user equipment according to claim 19, wherein the uplink signal measurement value comprises an uplink signal measurement value obtained after the access network device measures an uplink signal sent by the user equipment.

21. The user equipment according to claim 20, wherein the uplink signal measurement value further comprises an uplink signal measurement value obtained after a neighboring access network device of the access network device measures the uplink signal sent by the user equipment.

22. The user equipment according to any one of claims 19 to 21, wherein the preset condition is that the uplink signal measurement value is less than or equal to a preset threshold.

23. The user equipment according to any one of claims 19 to 22, wherein the first instruction message further comprises measurement configuration information of the neighboring access network device of the access network device, and the measurement configuration information is used to instruct the user equipment to measure, based on the measurement configuration information, a downlink signal sent by the neighboring access network device.

24. The user equipment according to any one of claims 19 to 23, wherein the first instruction message comprises a radio resource control RRC reconfiguration message, a measurement configuration message, or a paging message.

25. A communications system, comprising the access network device according to any one of claims 13 to 18 and the user equipment according to any one of claims 19 to 24.
